(19) Europäisches Patentamt
European Patent Office
Office européen des brevets

(11) **EP 3 275 317 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(51) Int Cl.:
***A23G 3/32*** *(2006.01)*

(21) Anmeldenummer: **17176708.0**

(22) Anmeldetag: **19.06.2017**

(54) **MILCHKARAMELLHERSTELLUNG OHNE KOCHEN**

MILK CARAMEL PRODUCTION WITHOUT COOKING

FABRICATION DE CARAMEL AU LAIT SANS CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2016 DE 102016113632**

(43) Veröffentlichungstag der Anmeldung:
**31.01.2018 Patentblatt 2018/05**

(73) Patentinhaber: **Chocotech GmbH**
**38855 Wernigerode (DE)**

(72) Erfinder:
• **Hilker, Erhard**
**32657 Lemgo (DE)**

• **Schoppe, Michael**
**38835 Osterwieck (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
| | |
|---|---|
| **EP-A1- 2 428 121** | **EP-A2- 1 486 125** |
| **DE-A1- 2 018 267** | **DE-A1- 2 520 049** |
| **DE-A1-102004 044 139** | **DE-T2- 69 618 990** |
| **SU-A1- 536 807** | **US-A- 4 056 640** |
| **US-A1- 2003 124 243** | **US-A1- 2006 077 753** |

**Beschreibung**

**TECHNISCHES GEBIET DER ERFINDUNG**

Die Erfindung betrifft das Gebiet der industriellen Herstellung von Süßwarenmassen und insbesondere eine Vorrichtung und ein Verfahren zum Herstellen von Milchkaramell durch Anwendung der Maillard-Reaktion.

Unter der Maillard-Reaktion wird eine vergleichsweise komplexe Gesamtheit mehrerer chemischer Reaktionen verstanden, die zu einer Vielzahl von Reaktionsprodukten führen. Dabei werden Aminverbindungen unter Wärmeeinwirkung zu neuen Verbindungen umgewandelt.

Im Fall des hier vorliegenden Spezialfalls der Milchkaramellherstellung handelt es sich bei dem Ausgangsstoff um mindestens ein Milchprodukte, also insbesondere um Milch, Milchpulver, Kondensmilch oder Sahne.

Das durch die Maillard-Reaktion entstehende Milchkaramell ist von dem Karamell zu unterscheiden, welches durch starkes trockenes Erhitzen von Zucker entsteht.

**STAND DER TECHNIK**

Ein Verfahren und eine Vorrichtung zum automatisierten Herstellen von Milchkaramell sind aus der deutschen Patentanmeldung DE 10 2004 044 139 A1 bekannt. Das Milchkaramell wird aus einer zuckerhaltigen Lösung aus Glukosesirup, Zucker und Milch oder aus einer zuckerfreien Lösung aus Wasser, einem Zuckerersatzstoff und Milch hergestellt. Die Lösung wird in einem Karamellisierbehälter gekocht, d. h. oberhalb des Siedepunkts der Lösung erhitzt. Das Kochen kann entweder unter Atmosphärendruck, Überdrück oder Unterdruck erfolgen.

Eine weitere Vorrichtung und ein Verfahren zum automatisierten Herstellen von Milchkaramell sind aus der deutschen Patentanmeldung DE 25 20 049 A1 bekannt. Das Milchkaramell wird aus einer zuckerhaltigen Lösung aus Glukosesirup, Zucker, Fett und Milch hergestellt. Die Lösung wird in einem Karamellisierbehälter gekocht, d. h. oberhalb des Siedepunkts der Lösung erhitzt. Das Kochen erfolgt unter Atmosphärendruck.

Eine weitere Vorrichtung und ein Verfahren zum automatisierten Herstellen von Milchkaramell sind aus der deutschen Patentanmeldung DE 2 018 267 bekannt. Das Milchkaramell wird aus einer zuckerhaltigen Lösung aus Glukosesirup, Zucker, Fett und Milch hergestellt. Die Lösung wird in einem Karamellisierbehälter gekocht, d. h. oberhalb des Siedepunkts der Lösung erhitzt. Das Kochen erfolgt unter Atmosphärendruck.

Eine Vorrichtung und ein Verfahren zum Herstellen einer Süßwarenmasse aus den Ausgangsstoffen Milcheiweiß, Zucker, Glukose, Fett und Wasser sind aus dem deutschen Patent DE 696 18 990 T2 bekannt. Diese Ausgangsstoffe werden gemischt, homogenisiert und durch eine Kochanlage entwässert. Zur Erreichung der gewünschten Maillard-Reaktion werden bestimmte Werte des Drucks und der Temperatur in dem geschlossenen Homogenisierungstank gewählt. Die Mischung wird dabei mehrfach gekocht.

Ein Verfahren und eine Vorrichtung zum automatisierten Herstellen von Milchkaramell sind aus dem US-amerikanischen Patent US 4,056,640 bekannt. Die Vorrichtung weist einen einzigen Behälter auf, in dem alle Verfahrensschritte stattfinden. Dabei wird die Gesamtmasse gekocht.

Ein Verfahren und eine Vorrichtung zum automatisierten Herstellen von Milchkaramell sind aus der US-amerikanischen Patentanmeldung US 2003/0124243 A1 bekannt. Die Vorrichtung weist mehrere Behälter auf, in denen die Verfahrensschritte stattfinden. Bevor das Milchprodukt der Grundlösung zugeführt wird, wird die Grundlösung gekocht.

**AUFGABE DER ERFINDUNG**

Der Erfindung liegt die Aufgabe zugrunde, eine automatisierte Vorrichtung und ein automatisiertes Verfahren zur energiesparenden Herstellung von Milchkaramell bereitzustellen.

**LÖSUNG**

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

**BESCHREIBUNG DER ERFINDUNG**

Die Erfindung betrifft eine Vorrichtung zum automatisierten Herstellen von Milchkaramell. Die Vorrichtung weist einen Druckauflösebehälter zur Aufnahme einer Grundmischung mit Glukosesirup und Zucker oder mit Wasser und einem Zuckerersatzstoff auf. Der Druckauflösebehälter steht gegenüber dem Atmosphärendruck unter Überdruck. Der Druckauflösebehälter dient zum Erzeugen einer Grundlösung aus der Grundmischung durch Erwärmen der Grundmischung unterhalb des Siedepunkts der Grundlösung. Die Vorrichtung weist eine Zuführleitung zum Zuführen eines Milchprodukts in die Grundlösung auf. Die Zuführleitung ist stromabwärts des Druckauflösebehälters angeordnet. Die Vorrichtung weist eine Karamellisiervorrichtung zum Erzeugen von Milchkaramell aus dem Milchprodukt auf. Die Karamellisiervorrichtung ist stromabwärts des Druckauflösebehälters angeordnet.

Die Erfindung betrifft weiterhin ein automatisiertes Verfahren zum Herstellen von Milchkaramell. Aus einer Grundmischung mit Glukosesirup und Zucker oder mit Wasser und einem Zuckerersatzstoff wird eine Grundlösung erzeugt. Dies erfolgt unter Überdrück gegenüber dem Atmosphärendruck und bei einer Temperatur unterhalb des Siedepunkts der Grundlösung. Ein Milchprodukt wird danach in die Grundlösung zugeführt. Aus dem Milchprodukt wird Milchkaramell erzeugt.

## Definitionen

**Automatisiert:** Unter einer automatisierten Vorrichtung und einem automatisierten Verfahren ist in dieser Anmeldung wie im Üblichen Sinne zu verstehen, dass diese den industriellen und professionellen Einsatz von Maschinen betreffen. Im Wesentlichen erfolgt die Regelung und der Betrieb der Vorrichtung und die Durchführung des Verfahrens in automatischer maschineller Weise. Die schließt aber nicht aus, dass einzelne Vorgänge durch einen Bediener manuell ausgelöst oder durchgeführt werden können.

**Grundmischung:** Die Grundmischung für die Herstellung der Süßwarenmasse weist als zuckerhaltige Variante mindestens die Bestandteile Glukosesirup und Zucker auf. Als zuckerfreie Variante weist sie mindestens Wasser und einen Zuckerersatzstoff auf. Bei beiden Varianten oder deren Mischformen kann die Grundmischung weitere Bestandteile aufweisen, z. B. Geliermittel, Stärke, Farben und Aromastoffe. Die Grundmischung weist flüssige Ausgangsstoffe und feste Ausgangsstoffe auf.

In dieser Anmeldung ist unter der Grundmischung auch die aus dieser entstehende Slurry zu verstehen. Bei einer Slurry handelt es sich um eine Suspension aus einer Flüssigkeit und darin enthaltenen Feststoffen, wobei die Feststoffe noch ungelöst sind. Für die Herstellung der Slurry wird als Ausgangsmasse eine Mischung aus mindestens einer Flüssigkeit und mindestens einem Trockenstoff angesetzt und anschließend so gemischt, dass die Slurry entsteht. Für diese Anmeldung kommt es aber nicht darauf an, die Mischung sprachlich von der Slurry zu unterscheiden.

**Grundlösung:** Nach dem Lösen der in der Slurry enthaltenen Feststoffe wird die Süßwarenmasse als Grundlösung bezeichnet.

**Milchkaramell:** Unter Milchkaramell wird in dieser Anmeldung das aufgrund einer Maillard-Reaktion in einem Milchprodukt entstehende Karamell verstanden. Dieses Milchkaramell ist von dem Karamell zu unterscheiden, welches durch starkes trockenes Erhitzen von Zucker entsteht.

## Weitere Beschreibung

Bei der neuen Vorrichtung und dem neuen Verfahren zum automatisierten Herstellen von Milchkaramell findet eine Aufteilung der für die Herstellung des Milchkaramells verwendeten Ausgangsstoffe statt.

Den ersten Teil bildet dabei die Grundmischung, in der bei der zuckerhaltigen Variante der Süßwarenmasse mindestens Glukosesirup und Zucker und bei der zuckerfreien Variante der Süßwarenmasse mindestens Wasser und ein Zuckerersatzstoff enthalten sind. Diese Grundmischung bzw. Grundslurry wird in einem Druckauflösebehälter zu einer Grundlösung verarbeitet.

Diese Verarbeitung findet unter Überdruck statt, d. h. einem gegenüber dem umgebenden Atmosphärendruck erhöhten Druck. Die Grundmischung wird dabei erwärmt, aber nicht gekocht. Sie wird nur bis unterhalb des Siedepunkts der Grundlösung erwärmt.

Dadurch wird im Vergleich zum Stand der Technik, bei dem die Gesamtmasse gekocht wird, der Energiebedarf wesentlich reduziert. Die Energieeinsparung ist dabei erheblich, da die Verdampfungswärme von Wasser bei Atmosphärendruck etwa 539 kcal/kg beträgt. Gegenüber dem Stand der Technik ergibt sich somit eine Energieeinsparung von etwa 30 bis 70 %.

Bei der Druckauflösung der Grundmischung entsteht kein Milchkaramell. Dieses wird erst einem oder mehreren später erfolgenden Schritten hergestellt. Dafür wird mindestens ein Milchprodukt in die Grundlösung zugeführt. Dieses bildet den zweiten Teil der Ausgangsstoffe. Aus dem Milchprodukt wird in einer Karamellisiervorrichtung Milchkaramell hergestellt. Die Karamellisiervorrichtung kann dabei einen oder mehrere Teile aufweisen, die gleich oder unterschiedlich ausgebildet sein können.

Nachdem die Grundlösung und das Milchprodukt das Druckhalteventil passiert haben, treten sie in einen Bereich der Vorrichtung ein, in dem ein niedrigerer Druck herrscht. Dieser Druck kann entweder ein verringerter Überdruck, Atmosphärendruck oder ein Unterdruck sein. Bei diesem Übergang kommt es in der heißen Grundlösung mit dem Milchprodukt zu einer spontanen Entspannungsverdampfung (die sogenannte "Flashverdampfung") und dadurch zu einer Abkühlung und gleichzeitig zu einem Verdampfungsverlust. Dies geht mit einem Wasserverlust einher, der in der Form von Brüden abgeführt wird. Somit sinkt der Trockensubstanzanteil der Süßwarenmasse. Die dabei herrschende Temperatur liegt beispielsweise in einem Bereich von etwa 110 bis 120 °C. Bei dieser Temperatur erfolgt nun automatisch in der Karamellisiervorrichtung die Herstellung des Milchkaramells aufgrund der ablaufenden Maillard-Reaktion.

Unter dem Karamellisierungsgrad versteht man die sich aufgrund der Maillard-Reaktion ergebende Bräune des Milchkaramells, die auch den Geschmack des Milchkaramells bestimmt. Neben der Rezeptur des Milchprodukts hängt der Karamellisierungsgrad im Wesentlichen von der beim Ablaufen der Maillard-Reaktion herrschenden Temperatur und der Verweildauer des Milchprodukts in der Karamellisiervorrichtung ab. Durch ein Ändern dieser Verweildauer kann der Karamellisierungsgrad eingestellt werden. Die Verweildauer wird insbesondere durch das genutzte Füllvolumen in der Karamellisiervorrichtung und die Größe des Volumenstroms bestimmt.

Stromabwärts des Druckauflösebehälters kann ein Druckhalteventil, insbesondere ein Schlauchquetschventil, angeordnet sein. Dieses Druckhalteventil ermöglicht die Einstellung des für die Druckauflösung erforderlichen Überdrucks.

Die Karamellisiervorrichtung kann einen Karamellisierbehälter aufweisen, der stromabwärts des Druckhalteventils angeordnet ist. In dem Karamellisierbehälter kann insbesondere ein vergleichsweise großes Volumen der Süßwarenmasse aufgenommen werden, so dass hohe Durchsätze erzielt werden können. Die Verweildauer der Süßwarenmasse in dem Karamellisierbehälter und das genutzte Füllvolumen des Karamellisierbehälters bestimmen bei einer vorgegebenen kontinuierlichen Durchflussrate den Karamellisierungsgrad. Es ist beispielsweise auch möglich, mehrere Karamellisierbehälter vorzusehen und diese in Serie oder parallel zueinander zu schalten.

Die Karamellisiervorrichtung kann alternativ oder zusätzlich einen Karamellisierrohrabschnitt aufweisen, der stromaufwärts des Druckhalteventils angeordnet ist. Der Karamellisierrohrabschnitt kann dabei insbesondere als ein Rohrabschnitt ausgebildet sein, der einen im Vergleich zu den sonstigen Rohrleitungen ver-größerten Durchtrittsquerschnitt besitzt. Die Karamelli-sierung findet dann in dem Karamellisierrohrabschnitt statt, sobald das Milchprodukt diesem zugeführt wurde und während das Milchprodukt gemeinsam mit der Grundlösung durch den Karamellisierrohrabschnitt in Richtung des Druckhalteventils fließt. Der Druck entspricht daher dem Druck in dem Druckauflösebehälter. Die Temperatur ist aufgrund der Zugabe des kälteren Milchprodukts etwas geringer als die der Grundmischung in dem Druckauflösebehälter.

Für die Erzeugung des erforderlichen Überdrucks in dem Druckauflösebehälter ist ein Überdruckerzeuger, insbesondere eine Pumpe, vorhanden. Diese ist stromaufwärts des Druckauflösebehälters angeordnet. Der Überdruck kann insbesondere zwischen etwa 2 und 5 bar absolut, insbesondere zwischen etwa 2 und 4 bar absolut, insbesondere zwischen etwa 2,5 und 3,5 bar absolut, insbesondere etwa 3 bar absolut betragen. Der Wert des Überdrucks kann mit dem Druckhalteventil und der Pumpe eingestellt werden.

Die Karamellisiervorrichtung ist insbesondere nicht zur Erhöhung der Temperatur der Grundlösung und des Milchprodukts beheizt. Die Karamellisiervorrichtung ist also entweder überhaupt nicht beheizt, sondern lediglich isoliert, oder wird nur zum Halten der Temperatur oder zum Reduzieren des Sinkens der Temperatur beheizt. Die eigentliche Milchkaramellherstellung erfolgt nicht durch das Beheizen der Karamellisiervorrichtung.

Die Temperatur der Grundlösung in dem Druckauflösebehälter kann insbesondere zwischen etwa 120 und 200 °C, insbesondere zwischen etwa 130 und 180 °C, insbesondere zwischen etwa 140 und 170 °C, insbesondere etwa 160 °C betragen.

Die Zuführleitung kann direkt an den Karamellisierbehälter oder an eine in diesen führende Rohrleitung angeschlossen sein. Dies bedeutet, dass das Milchprodukt entweder direkt in den Karamellisierbehälter oder indirekt über eine in diesen führende Rohrleitung der Grundmischung in dem Karamellisierbehälter zugeführt wird.

Im Falle des Vorhandenseins eines Karamellisierrohrabschnitts ist die Zuführleitung insbesondere direkt an diesen oder an eine in diesen führende Rohrleitung angeschlossen.

Das Milchprodukt kann Teil einer Fett oder Öl enthaltenden Zugabemasse sein. Auch die Grundmischung kann alternativ oder zusätzlich Fett oder Öl enthalten. Die Zugabemasse und die Grundmischung können auch weitere Bestandteile aufweisen, z. B. Aromen. Der Trockensubstanzanteil der Zugabemasse kann insbesondere zwischen etwa 70 und 85 % betragen. Die Temperatur der Zugabemasse kann insbesondere zwischen etwa 20 und 70 °C betragen.

Wenn das Milchprodukt Teil einer Zugabemasse mit Öl oder Fett ist, kann das Milchprodukt selbst kein oder nur wenig Wasser aufweisen. Es kann sich also insbesondere um Milchpulver handeln, das in dem Öl oder Fett dispergiert ist. Wenn hingegen nur die Grundmischung das Fett oder Öl aufweist, weist das Milchprodukt Wasser auf. Wenn es sich um Milchpulver handelt, ist dieses in Wasser gelöst.

Die Grundmischung kann insbesondere einen Trockensubstanzanteil von mindestens 80 % aufweisen. Während der Druckauflösung kann sie insbesondere eine Temperatur von etwa 170 °C besitzen. In diesem Fall beträgt der Überdruck etwa 5 bar absolut.

Das fertige Milchkaramell kann insbesondere einen Trockensubstanzanteil von zwischen etwa 80 und 95 %, insbesondere etwa 85 %, aufweisen.

Milchkaramell wird im Stand der Technik häufig als Weichkaramell bezeichnet. Der Begriff des Weichkaramells stellt aber nicht auf das Milchprodukt als Ausgangsstoff, sondern auf den vergleichsweise niedrigen Trockensubstanzanteil ab. Daher wird in dieser Anmeldung der Begriff des Milchkaramells verwendet.

Das Mischungsverhältnis zwischen der Grundlösung und der Milchkomponente bzw. der Zugabemasse beträgt insbesondere zwischen etwa 50 % zu 50 % bis etwa 90 % zu 10 %, insbesondere etwa 65 % zu 35 %.

Zur Erzeugung der Grundmischung bzw. Slurry können insbesondere eine Vorrichtung und ein Verfahren verwendet werden, wie diese im europäischen Patent EP 2 428 121 B1 der Anmelderin beschrieben sind. Bezüglich der Herstellung dieser Grundmischung und der Slurry wird daher vollumfänglich auf dieses Patent verwiesen. Ein Unterschied besteht aber darin, dass bei der hier vorliegenden Erfindung die Herstellung der Grundlösung durch eine (Über-)Druckauflösung erfolgt.

Die neue Vorrichtung und das neue Verfahren zum Herstellen von Milchkaramell arbeiten insbesondere kontinuierlich. Eine solche kontinuierliche Herstellung ist von einer satzweisen Herstellung zu unterscheiden. Sie bedeutet aber nicht, dass eine streng kontinuierliche Arbeitsweise vorliegen muss. Gelegentliche Unterbrechungen oder vereinzelte regelmäßige oder unregelmäßige nicht-kontinuierliche Ereignisse sind möglich. Der wesentliche Prozess erfolgt aber kontinuierlich.

Es ist aber auch möglich, die neue Vorrichtung und das neue Verfahren zum satzweisen Herstellen von Milchkaramell einzusetzen. Dies bietet sich insbesondere an, wenn auch die Herstellung der Grundmischung satzweise erfolgt. Es sind aber auch Kombinationen von satzweise ablaufenden Verfahrensschritten und kontinuierlich ablaufenden Verfahrensschritten möglich.

Jeder der zuvor beschriebenen Verfahrensschritte wird insbesondere automatisiert ausgeführt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Zuführleitung die Rede ist, ist dies so zu verstehen, dass genau eine Zuführleitung, zwei Zuführleitungen oder mehr Zuführleitungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1 zeigt eine erste beispielhafte Ausführungsform einer neuen Vorrichtung zum automatisierten Herstellen von Milchkaramell.

Fig. 2 zeigt eine zweite beispielhafte Ausführungsform der neuen Vorrichtung zum automatisierten Herstellen von Milchkaramell.

Fig. 3 zeigt eine dritte beispielhafte Ausführungsform der neuen Vorrichtung zum automatisierten Herstellen von Milchkaramell.

Fig. 4 zeigt eine vierte beispielhafte Ausführungsform der neuen Vorrichtung zum automatisierten Herstellen von Milchkaramell.

Fig. 5 zeigt ein zu der Vorrichtung gemäß Fig. 1 gehörendes Zustandsdiagramm.

Fig. 6 zeigt ein zu der Vorrichtung gemäß Fig. 2 gehörendes Zustandsdiagramm.

Fig. 7 zeigt ein erstes zu der Vorrichtung gemäß Fig. 3 gehörendes Zustandsdiagramm.

Fig. 8 zeigt ein zweites zu der Vorrichtung gemäß Fig. 3 gehörendes Zustandsdiagramm.

Fig. 9 zeigt ein erstes zu der Vorrichtung gemäß Fig. 4 gehörendes Zustandsdiagramm.

Fig. 10 zeigt ein zweites zu der Vorrichtung gemäß Fig. 4 gehörendes Zustandsdiagramm.

## FIGURENBESCHREIBUNG

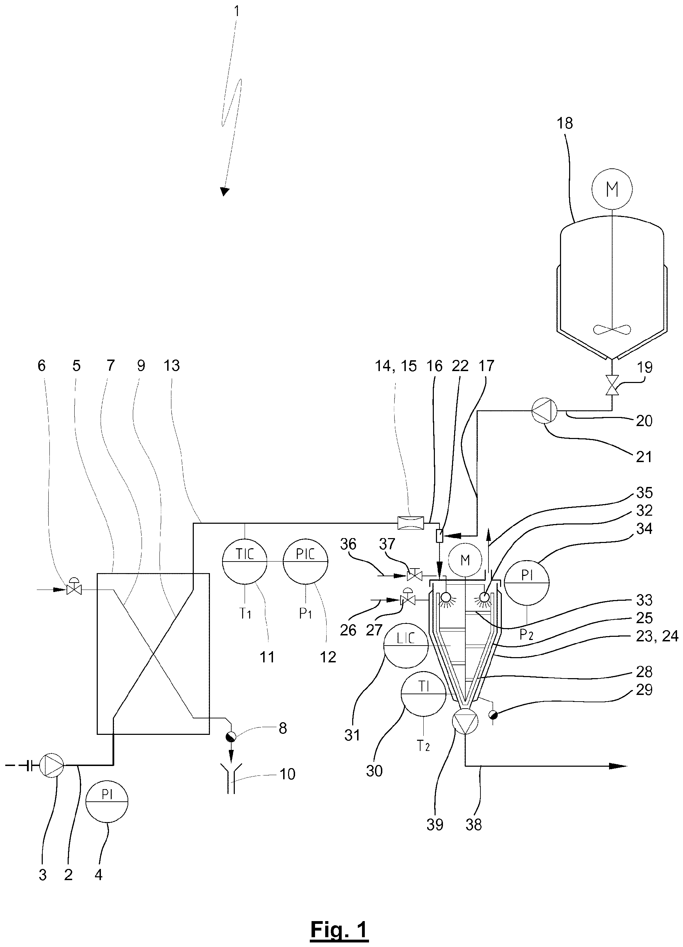

Fig. 1 zeigt eine erste beispielhafte Ausführungsform einer neuen Vorrichtung 1 zum automatisierten Herstellen von Milchkaramell als Süßwarenmasse. Das Milchkaramell wird aus einer Grundmischung mindestens mit Glukosesirup und Zucker oder mindestens mit Wasser und einem Zuckerersatzstoff hergestellt. Die Grundmischung kann auch weitere Ausgangsstoffe aufweisen, z. B. Fett oder Öl. Die Grundmischung weist flüssige und feste Ausgangsstoffe auf. Als eine solche Grundmischung ist auch eine Slurry zu verstehen, d. h. eine Suspension aus einer Flüssigkeit und den darin enthaltenen Feststoffen.

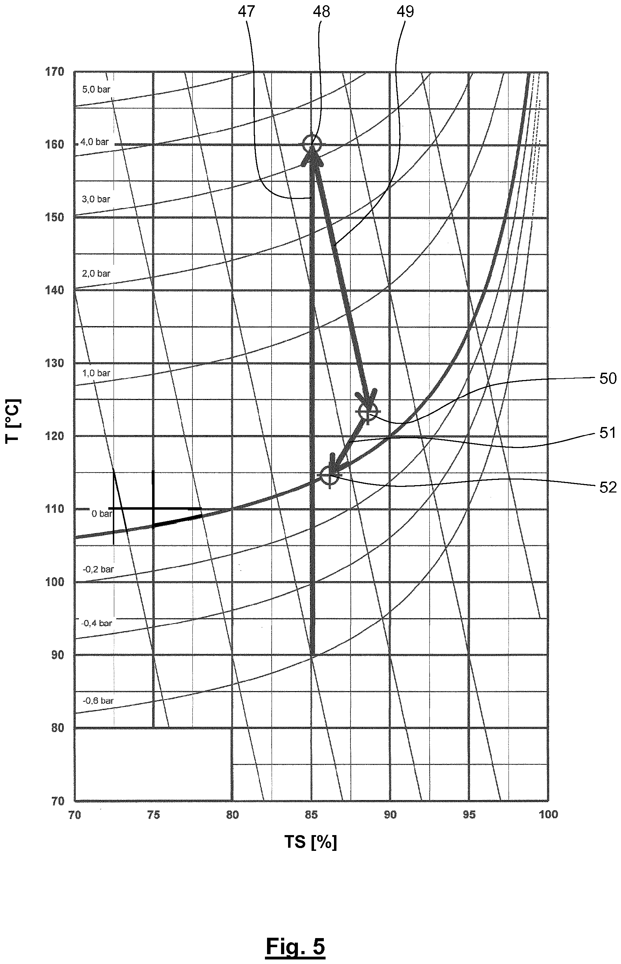

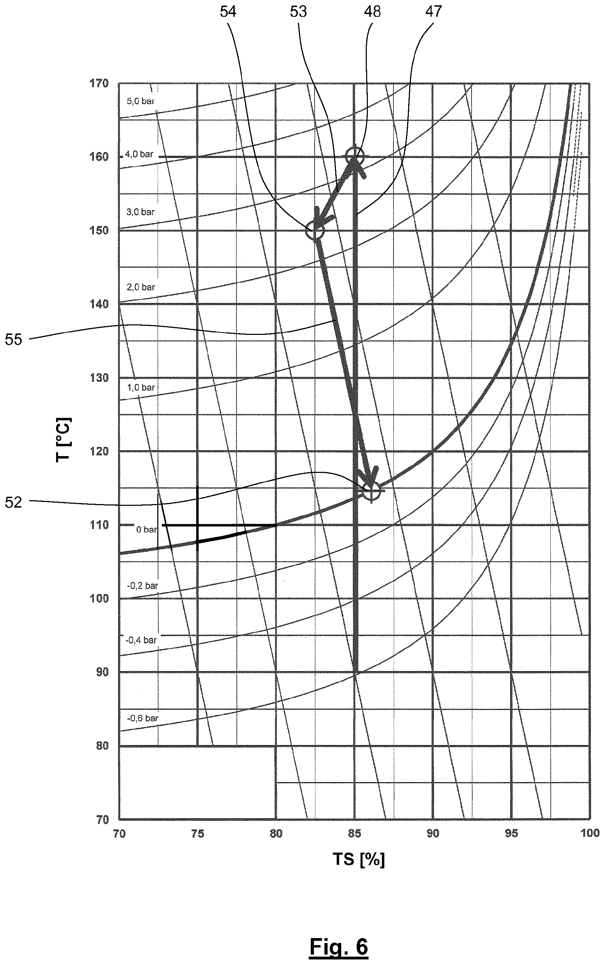

Da es bei der Erfindung um die Vorrichtungsdetails und die Verfahrensschritte nach dem Herstellen der Grundmischung bzw. Slurry geht, werden die stromaufwärts angeordneten Vorrichtungsteile und zeitlich davor liegenden Verfahrensschritte im Folgenden nicht weiter beschrieben. Diesbezüglich wird auf die Zeichnungen und die Figurenbeschreibung des europäischen Patents EP 2 428 121 B1 der Anmelderin verwiesen. Die mit der dort gezeigten und beschriebenen Vorrichtung erzeugte Slurry wird bevorzugt als Ausgangsmasse (Grundmischung) für die hier beschriebene Milchkaramellherstellung verwendet. Die Tatsache, dass sich die in dem europäischen Patent EP 2 428 121 B1 gezeigten Anlagenteile stromaufwärts der in den hiesigen Fig. 1-4 gezeigten Vorrichtung 1 befinden, ist durch die gestrichelte Linie unten links in den Fig. 1-4 symbolisiert. Bei der dort dargestellten Rohrleitung kann es sich insbesondere um die Rohrleitung 79 aus Fig. 5 oder 6 des europäischen Patents EP 2 428 121 B1 handeln.

Die neue Vorrichtung 1 weist stromaufwärts beginnend eine Rohrleitung 2 auf, in der eine Pumpe 3 angeordnet ist. Stromabwärts der Pumpe 3 ist eine Druckmesseinrichtung 4 angeordnet, mittels der der durch die Pumpe 3 erzeugte Überdruck gemessen wird. Die Rohrleitung 2 führt in einen Druckauflösebehälter 5. Der Druckauflösebehälter 5 weist ein Ventil 6, eine Leitung 7 und einen Kondensatableiter 8 auf. Durch das Ventil 6 und die Leitung 7 gelangt ein Wärmeenergie abgebendes Sekundärmedium - insbesondere Dampf - durch den Druckauflösebehälter 5 und beheizt somit den Druckauflösebehälter 5 und die durch die Rohrleitung 9 strömende Grundmischung, Slurry bzw. Grundlösung. Das sich aufgrund der Abkühlung des Sekundärmediums entstehende Kondensat wird in eine Drainage 10 abgeführt.

In dem Druckauflösebehälter 5 wird die Grundmischung unterhalb ihres Siedepunkts und unter Überdruck erwärmt, so dass die Grundlösung entsteht. Für die Regelung der Verfahrensparameter Temperatur und Druck sind hierfür eine Temperaturregeleinrichtung 11 und eine Druckregeleinrichtung 12 vorhanden.

Im weiteren Verlauf der Rohrleitung 13 stromabwärts ist ein Druckhalteventil 14 angeordnet. Im vorliegenden Fall ist das Druckhalteventil 14 als ein Schlauchquetschventil 15 ausgebildet. Es könnte sich aber auch um ein anderes geeignetes Druckhalteventil 14 handeln. Durch die Pumpe 3, die Druckregeleinrichtung 12 und das Druckhalteventil 14 kann der in dem Druckauflösebehälter 5 herrschende Überdruck geregelt werden.

Nach dem Passieren des Druckhalteventils 14 gelangt die Grundlösung in eine Rohrleitung 16, in der nun Atmosphärendruck herrscht. An die Rohrleitung 16 ist mittels eines Verbindungsstücks 22 eine Zuführleitung 17 angeschlossen. Durch diese Zuführleitung 17 wird ein Milchprodukt in die Grundlösung zugeführt. Im vorliegenden Beispiel wird das Milchprodukt in einem Mischbehälter 18 gemischt und verlässt diesen durch ein Ventil 19 und eine Rohrleitung 20. Mittels einer Pumpe 21 wird das Milchprodukt in die Rohrleitung 16 gepumpt.

Anschließend gelangt die nun auch das Milchprodukt enthaltende Grundlösung in eine Karamellisiervorrichtung 23. In diesem Fall ist die Karamellisiervorrichtung 23 als Karamellisierbehälter 24 ausgebildet. Der Karamellisierbehälter 24 weist eine Heizeinrichtung 25 auf, mittels der die im Karamellisierbehälter 24 enthaltene Grundlösung und das Milchprodukt beheizt werden. Hierfür weist die Heizeinrichtung 25 eine Leitung 26, ein Ventil 27, eine Doppelwand 28 und einen Kondensatableiter 29 auf. Die Heizeinrichtung 25 bzw. der Karamellisierbehälter 24 weist weiterhin eine Temperaturregeleinrichtung 30 und eine Füllstandsregeleinrichtung 31 auf. Die Heizeinrichtung 25 wird dabei so geregelt, dass die Temperatur der Grundlösung und des Milchprodukts nicht erhöht wird. Stattdessen wird die Temperatur lediglich gehalten oder das Absinken der Temperatur verlangsamt.

Der Karamellisierbehälter 24 weist weiterhin eine Abstreifvorrichtung 33 auf. Mittels der Abstreifvorrichtung 33 wird die sich im Bereich der Seitenwände absetzende Süßwarenmasse wieder dem Mischprozess im Karamellisierbehälter 24 zugeführt.

Der Karamellisierbehälter 24 weist weiterhin eine Reinigungsvorrichtung 32 auf, zu der eine Leitung 36 und ein Ventil 37 gehören. Mittels der Reinigungsvorrichtung 32 wird der Karamellisierbehälter 24 nach Beendigung der Produktion mit einer Reinigungsflüssigkeit, z. B. Wasser, gereinigt. Im vorliegenden Fall weist die Reinigungsvorrichtung 32 Sprühdüsen auf.

Der Karamellisierbehälter 24 ist in diesem Fall offen zur Atmosphäre ausgebildet. Es herrscht daher Atmosphärendruck, der mittels einer Druckmesseinrichtung 34 gemessen werden kann. Es ist ein Auslass vorgesehen, durch den die entstehenden Brüden 35 aus dem Karamellisierbehälter 24 austreten können.

Nach der geregelten Erzeugung des Milchkaramells aus dem Milchprodukt gelangt die entstandene karamellhaltige Süßwarenmasse durch einen Auslass und eine daran anschließende Rohrleitung 38 aus dem Karamellisierbehälter 24. Die Süßwarenmasse wird mittels einer Pumpe 39 durch die Rohrleitung 38 gepumpt und einer weiteren Verwendung zugeführt.

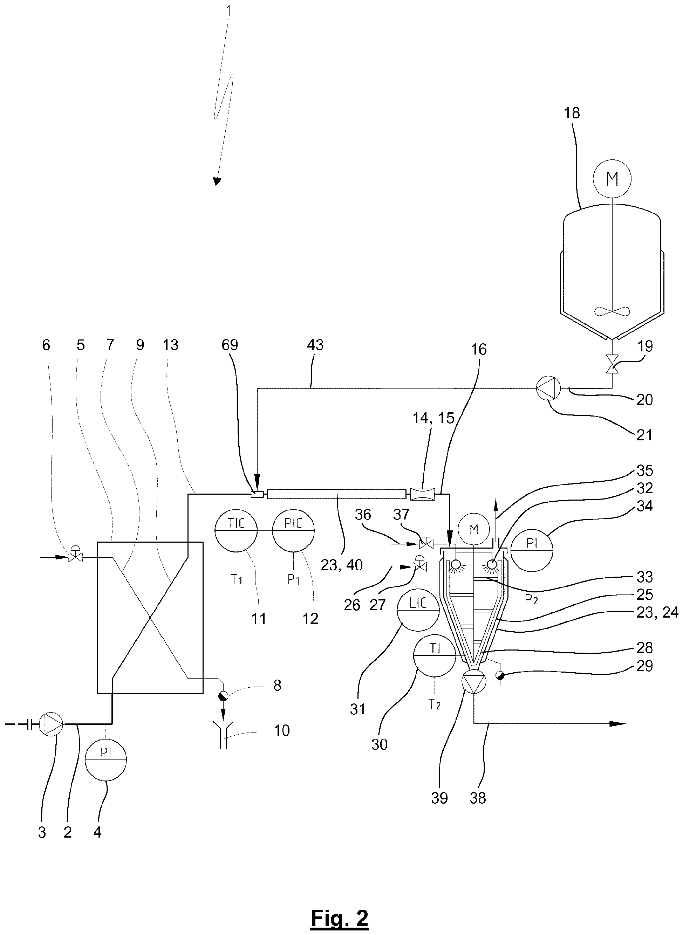

In **Fig. 2** ist eine zweite beispielhafte Ausführungsform der neuen Vorrichtung 1 dargestellt, die viele Gemeinsamkeiten mit der in Fig. 1 dargestellten Ausführungsform der Vorrichtung 1 besitzt. Bezüglich der Gemeinsamkeit wird daher auf die oberhalb angegebenen Ausführungen verwiesen.

Im Unterschied zu Fig. 1 weist hier die Karamellisiervorrichtung 23 nicht nur den Karamellisierbehälter 24, sondern auch einen Karamellisierrohrabschnitt 40 auf. Der Karamellisierrohrabschnitt 40 ist stromaufwärts des Druckhalteventils 14 angeordnet und somit dem im Bereich des Druckauflösebehälters 5 herrschenden Überdruck ausgesetzt. Wenn das Milchprodukt über eine Zuführleitung 43 und ein Verbindungsstück 69 mit der heißen Grundlösung zusammenkommt und sich dabei erhitzt, entsteht in dem Karamellisierrohrabschnitt 40 Milchkaramell. Um den Karamellisierungsgrad bestimmen zu können, weist der Karamellisierrohrabschnitt 40 insbesondere einen größeren Durchschnittsquerschnitt als die Leitung 13 auf.

Anschließend gelangt die bereits vorkaramellisierte Süßwarenmasse in den Karamellisierbehälter 24, in dem die oberhalb beschriebene Karamellisierung nun (zusätzlich) stattfindet.

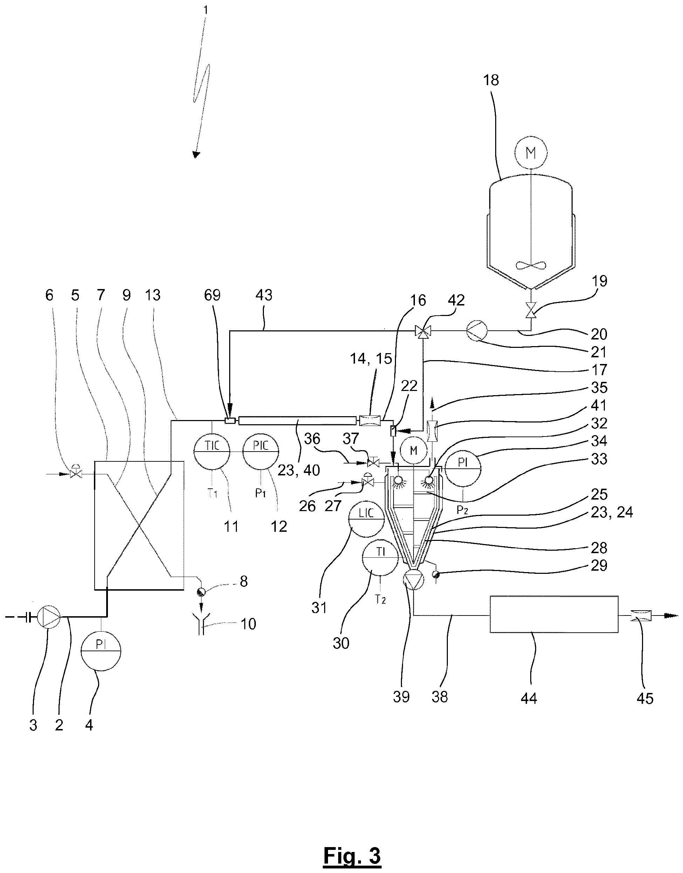

In **Fig. 3** ist eine dritte beispielhafte Ausführungsform der neuen Vorrichtung 1 dargestellt, die viele Gemeinsamkeiten mit der in Fig. 2 dargestellten Ausführungsform der Vorrichtung 1 besitzt. Bezüglich der Gemeinsamkeit wird daher auf die oberhalb angegebenen Ausführungen verwiesen.

Im Unterschied dazu steht der Karamellisierbehälter 24 hier ebenfalls unter Überdruck. Hierfür ist dieser mittels eines Druckhalteventils 41 druckmäßig von der Atmosphäre abgeschlossen. Stromabwärts der Pumpe 21 ist ein zusätzliches Ventil 42 vorhanden, von dem nicht nur die Zuführleitung 17, sondern auch die Zuführleitung 43 abzweigt. Dieses Ventil 42 ist so ausgebildet, dass die Verteilung (von 0 % zu 100 % über 50 % zu 50 % bis 100 % zu 0 %) des Milchprodukts auf die Zuführleitungen 17, 43 einstellbar ist. Hierdurch gelangt ein Teil des Milchprodukts in die Zuführleitung 43 und den Karamellisierrohrabschnitt 40, wie dies oberhalb im Zusammenhang mit Fig. 2 beschrieben wurde. Ein anderer Teil der Masse des Milchprodukts gelangt durch die Zuführleitung 17 direkt in den Karamellisierbehälter 24, wie dies oberhalb im Zusammenhang mit Fig. 1 beschrieben wurde. Durch die Veränderung der Anteile der beiden Volumenströme lässt sich der Karamellisierungsgrad flexibel einstellen.

Stromabwärts des Karamellisierbehälters 24 führt die Rohrleitung 38 die Süßwarenmasse dann durch einen Kühler 44, in dem die Süßwarenmasse abgekühlt wird. Stromabwärts des Kühlers 44 ist ein weiteres Druckhalteventil 45 angeordnet. Erst stromabwärts des Druckhalteventils 45 ist die Süßwarenmasse somit nicht mehr dem Überdruck ausgesetzt.

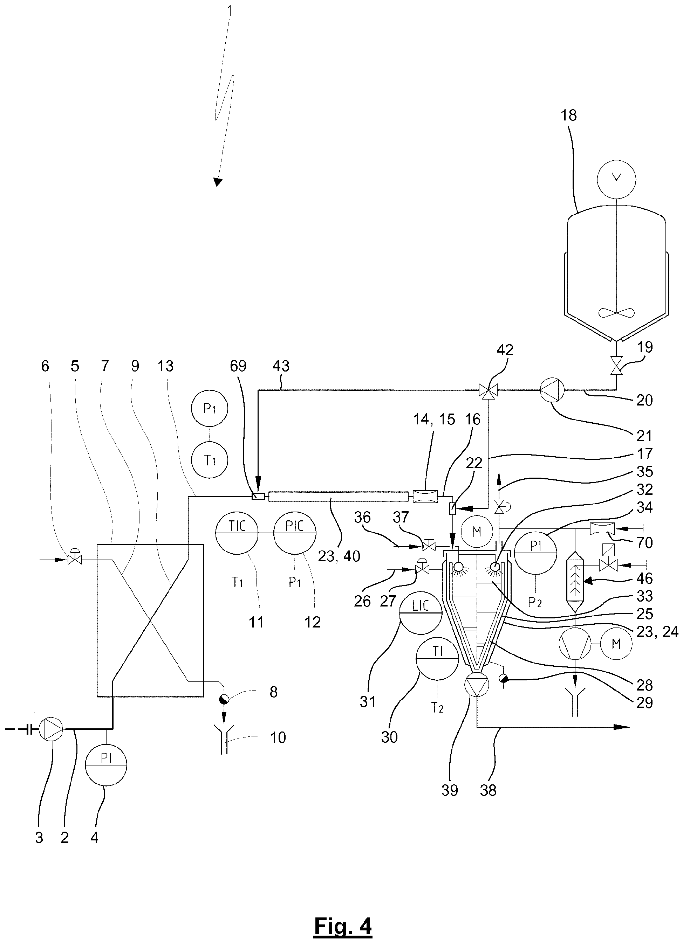

In **Fig. 4** ist eine vierte beispielhafte Ausführungsform der neuen Vorrichtung 1 dargestellt, die viele Gemeinsamkeiten mit der in Fig. 3 dargestellten Ausführungsformen der Vorrichtung 1 besitzt. Bezüglich der Gemeinsamkeit wird daher auf die oberhalb angegebenen Ausführungen verwiesen.

Im Unterschied dazu steht der Karamellisierbehälter 24 unter Unterdruck. Hierfür sind eine Unterdruckvorrichtung 46 und ein weiteres Druckhalteventil 70 vorhanden. Die Unterdruckvorrichtung 46 weist für sich genommen bekannte Bestandteile auf, so dass auf eine weitergehende Beschreibung verzichtet wird. Durch die Unterdruckvorrichtung 46 steht also die Süßwarenmasse in dem Karamellisierbehälter 24 unter Unterdruck. Erst beim Verlassen der Karamellisiervorrichtung 24 ist sie dem Atmosphärendruck ausgesetzt.

In **Fig. 5** ist ein zu der Vorrichtung 1 und dem Verfahren gemäß Fig. 1 gehörendes Siedediagramm gezeigt. Es ist der Verlauf der Temperatur T in °C, des Drucks P in bar und des Trockensubstanzanteils TS in % dargestellt. Die erste Linie 47 zeigt den Prozess des Druckauflösens der Süßwarenmasse in dem Druckauflösebehälter 5. Am Ende der Linie 47 wird der Punkt 48 erreicht, an dem die Temperatur $T_1$ und der Druck $P_1$ herrschen, wie diese mittels der Temperaturregeleinrichtung 11 und der Druckregeleinrichtung 12 gemessen werden (siehe Fig. 1). An diesem Punkt 48 liegt weiterhin ein Trockensubstanzanteil $TS_1$ vor. Bei dem hier dargestellten Beispiel liegen in Punkt 48 etwa die folgenden Werte vor:

$$T_1 \quad = 160\ °C$$

$$P_1 \quad = 3{,}3\ bar$$

$$TS_1 = 85\ \%$$

Im weiteren Verlauf der Linie 49 findet nun eine druckmäßige Entspannung statt. Diese Entspannung erfolgt nach dem Passieren des Druckhalteventils 14. Es wird der Punkt 50 erreicht. Hier liegen nun etwa die folgenden Werte vor:

$$T_{1'} \quad = 123\ °C$$

$$P_{1'} \quad = 0{,}3\ bar$$

$$TS_{1'} \quad = 88\ \%$$

Im Verlauf der weiteren Linie 51 erfolgt nun das Zuführen des Milchprodukts durch die Zuführleitung 17, bis der Punkt 52 erreicht ist. Hier liegen nun etwa die folgenden Werte vor:

$$T_2 \quad = 115\ °C$$

$$P_2 \quad = 0\ bar\ (bzw.\ Atmosphärendruck)$$

$$TS_2 \quad = 86\ \%$$

In **Fig. 6** ist ein zu der Vorrichtung 1 und dem Verfahren gemäß Fig. 2 gehörendes Siedediagramm gezeigt. Bezüglich der übereinstimmenden Aspekte wird auf die oberhalb angegebenen Ausführungen zu Fig. 5 verwiesen. Es liegen wieder die Linie 47 und der Punkt 48 mit den oberhalb beschriebenen Zahlenwerten vor. Danach erfolgt aber die Zuführung des Milchprodukts in den Karamellisierrohrabschnitt 40 vor dem Druckhalteventil 14. Dies führt zu der Linie 53 und Punkt 54. Im Gegensatz zu Punkt 50 liegt hier also noch ein vergleichsweise hoher Überdruck und eine vergleichsweise hohe Temperatur vor. In Punkt 54 liegen etwa die folgenden Werte vor:

$$T_{1'} = 150\ °C$$

$$P_{1'} = 2,5\ bar$$

$$TS_{1'} = 82,5\ \%$$

Die dem Punkt 54 folgende Linie 55 entspricht wieder dem Entspannungsvorgang nach dem Passieren des Druckhalteventils 14. Es wird wieder der Punkt 52 erreicht.

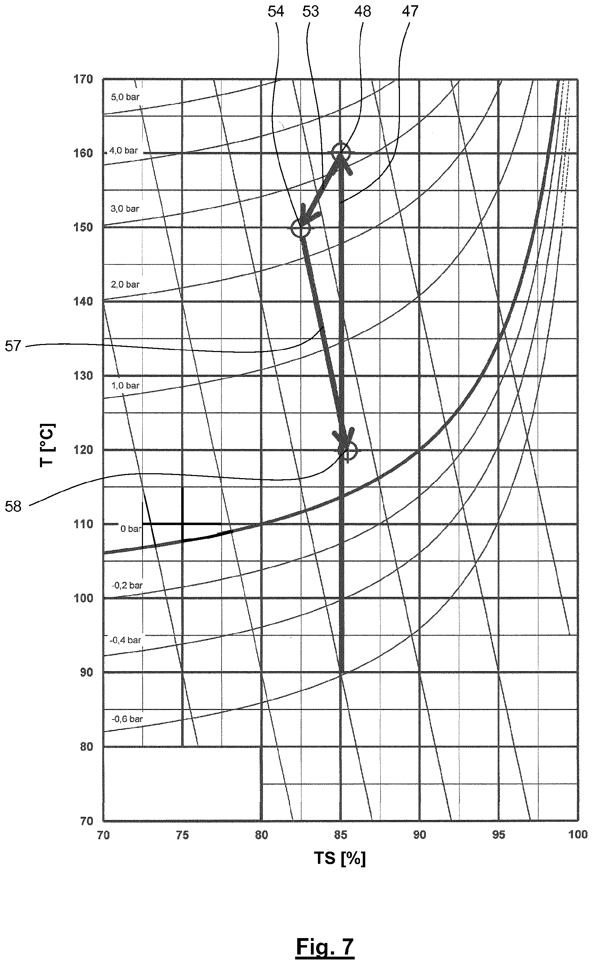

In **Fig. 7** ist ein erstes zu der Vorrichtung 1 und dem Verfahren gemäß Fig. 3 gehörendes Siedediagramm gezeigt. Bezüglich der übereinstimmenden Aspekte wird auf die oberhalb angegebenen Ausführungen zu Fig. 6 verwiesen. Dieses erste Zustandsdiagramm gehört zu der Zuführung des Milchprodukts in den Karamellisierrohrabschnitt 40 vor dem Druckhalteventil 14. Es liegen wiederum die Linie 47, der Punkt 48, die Linie 53 und der Punkt 54 vor. In diesem Fall schließt sich dann aber eine Linie 57 und ein Punkt 58 an. Es liegt weiter Überdruck vor. Dementsprechend liegen in Punkt 58 in etwa die folgenden Werte vor:

$$T_2 = 120\ °C$$

$$P_2 = 0,3\ bar$$

$$TS_2 = 85\ \%$$

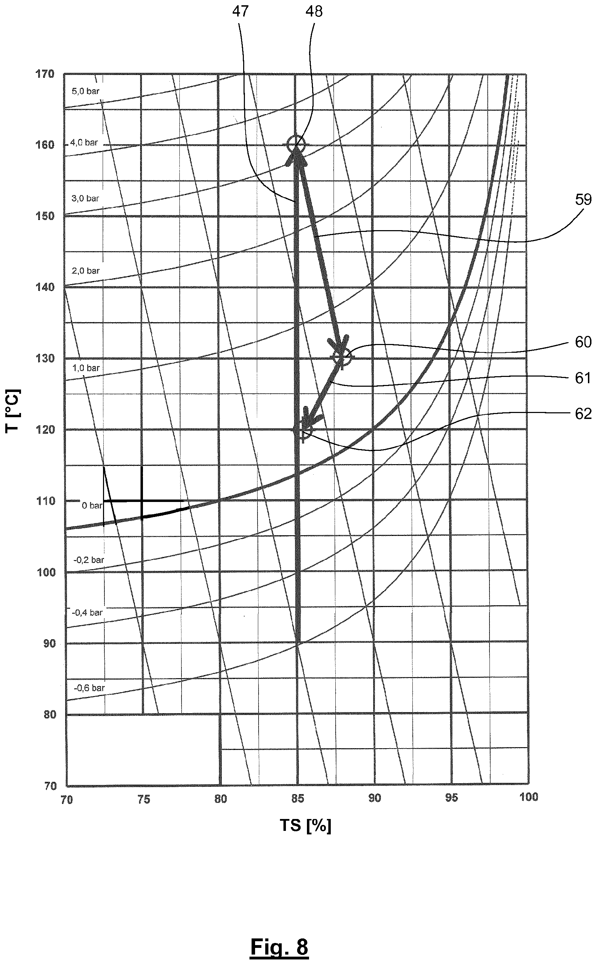

In **Fig. 8** ist ein zweites zu der Vorrichtung 1 und dem Verfahren gemäß Fig. 3 gehörendes Siedediagramm gezeigt. Bezüglich der übereinstimmenden Aspekte wird auf die oberhalb angegebenen Ausführungen zu Fig. 5 verwiesen. Dieses zweite Zustandsdiagramm gehört zu der Zuführung des Milchprodukts durch die Zuführleitung 17. Es ergeben sich davor für die Grundmischung aufgrund der Entspannung nach dem Druckhalteventil 14 die Linie 59 und der Punkt 60. In Punkt 60 liegen etwa die folgenden Werte vor:

$$T_{1'} = 130\ °C$$

$$P_{1'} = 0,7\ bar$$

$$TS_{1'} = 87\ \%$$

Nun erfolgt die Zuführung des Milchprodukts. An den Punkt 60 schließt sich daher die Linie 61 an, die in dem Punkt 62 endet. In dem Punkt 62 liegen etwa die folgenden Werte vor:

$$T_2 = 120\ °C$$

$$P_2 = 0,3\ bar$$

$$TS_2 = 85\ \%$$

Es versteht sich, dass sich bei einer anderen Einstellung der Verteilung der Volumenströme durch das Ventil 42 je nach Verhältnis andere Kurvenverläufe ergeben.

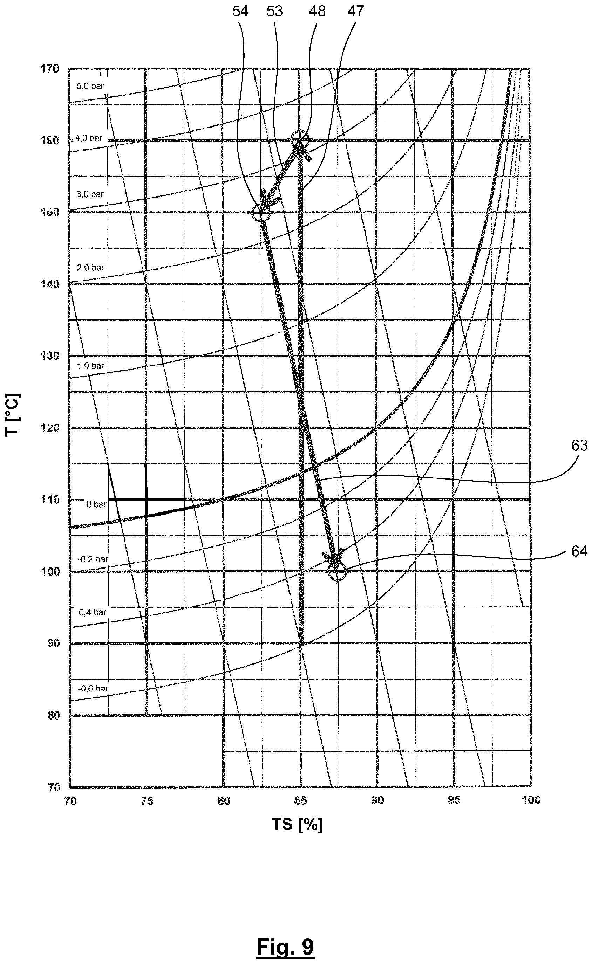

In **Fig. 9** ist ein erstes zu der Vorrichtung 1 und dem Verfahren gemäß zu Fig. 4 gehörendes Siedediagramm gezeigt. Bezüglich der übereinstimmenden Aspekte wird auf die oberhalb angegebenen Ausführungen zu Fig. 6 verwiesen. Dieses erste Zustandsdiagramm gehört zu der Einstellung des Ventils 42 derart, dass das Milchprodukt in den unter Überdruck stehenden Karamellisierrohrabschnitt 40 eintritt und sich somit wieder nach der Linie 53 der Zustand gemäß Punkt 54 einstellt. Es schließt sich dann aber eine Linie 63 an, die in einem Punkt 64 endet. Dies entspricht dem Entspannen der Süßwarenmasse durch das Heraustreten der Süßwarenmasse aus dem Bereich eines Überdrucks und dem Eintreten in den Bereich eines Unterdrucks. In dem Punkt 64 liegen etwa die folgenden Werte vor:

$$T_2 = 100\ °C$$

$$P_2 = -\ 0,45\ bar$$

$$TS_2 = 87,5\ \%$$

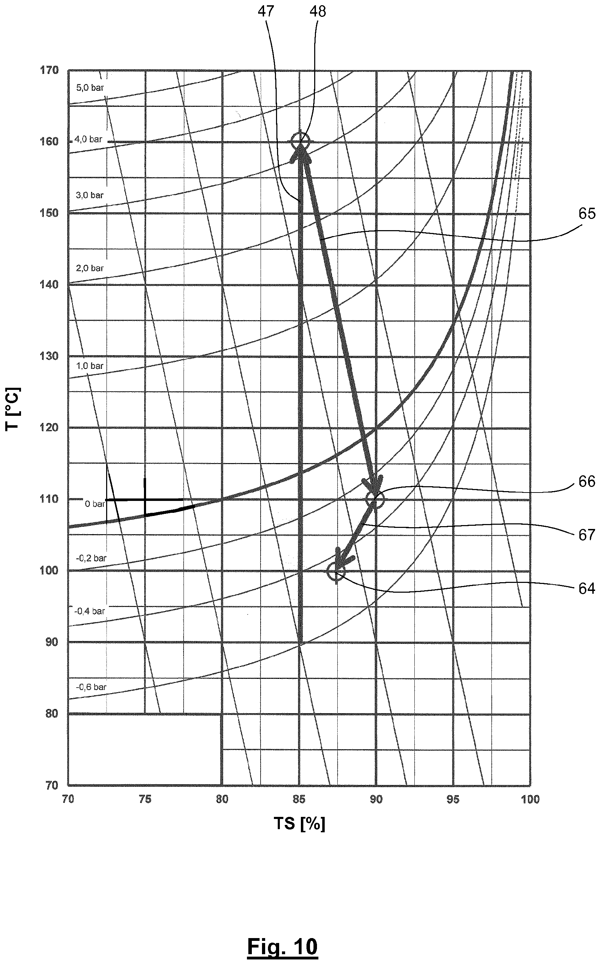

In **Fig. 10** ist ein zweites zu der Vorrichtung 1 und dem Verfahren gemäß Fig. 4 gehörendes Zustandsdiagramm gezeigt. Bezüglich der übereinstimmenden Aspekte wird auf die oberhalb angegebenen Ausführungen zu Fig. 5 verwiesen. Dieses zweite Zustandsdiagramm gehört zu der Einstellung des Ventils 42 derart, dass das Milchprodukt nicht dem Karamellisierrohrabschnitt 40, sondern direkt der Karamellisiervorrichtung 23 zugeführt wird. Davor erfolgt gemäß Linie 65 die Entspannung der Grundlösung, die zum Punkt 66 führt. In Punkt 66 liegen in etwa die folgenden Werte vor:

$$T_{1'} = 110\ ^{\circ}C$$

$$P_{1'} = -0,3\ bar$$

$$TS_{1'} = 90\ \%$$

Im Anschluss daran erfolgt gemäß Linie 67 die Zuführung des Milchprodukts, die wieder in Punkt 64 endet.

Es versteht sich, dass sich bei einer anderen Einstellung der Verteilung der Volumenströme durch das Ventil 42 je nach Verhältnis andere Kurvenverläufe ergeben.

**BEZUGSZEICHENLISTE**

| | |
|---|---|
| 1 | Vorrichtung |
| 2 | Rohrleitung |
| 3 | Pumpe |
| 4 | Druckmesseinrichtung |
| 5 | Druckauflösebehälter |
| 6 | Ventil |
| 7 | Leitung |
| 8 | Kondensatableiter |
| 9 | Rohrleitung |
| 10 | Drainage |
| 11 | Temperaturregeleinrichtung |
| 12 | Druckregeleinrichtung |
| 13 | Rohrleitung |
| 14 | Druckhalteventil |
| 15 | Schlauchquetschventil |
| 16 | Rohrleitung |
| 17 | Zuführleitung |
| 18 | Mischbehälter |
| 19 | Ventil |
| 20 | Rohrleitung |
| 21 | Pumpe |
| 22 | Verbindungsstück |
| 23 | Karamellisiervorrichtung |
| 24 | Karamellisierbehälter |
| 25 | Heizeinrichtung |
| 26 | Leitung |
| 27 | Ventil |
| 28 | Doppelwand |
| 29 | Kondensatableiter |
| 30 | Temperaturregeleinrichtung |
| 31 | Füllstandregeleinrichtung |
| 32 | Reinigungsvorrichtung |
| 33 | Abstreifvorrichung |
| 34 | Druckmesseinrichtung |
| 35 | Brüden |
| 36 | Leitung |
| 37 | Ventil |

| | |
|---|---|
| 38 | Rohrleitung |
| 39 | Pumpe |
| 40 | Karamellisierrohrabschnitt |
| 41 | Druckhalteventil |
| 42 | Ventil |
| 43 | Zuführleitung |
| 44 | Kühler |
| 45 | Druckhalteventil |
| 46 | Unterdruckvorrichtung |
| 47 | Linie |
| 48 | Punkt |
| 49 | Linie |
| 50 | Punkt |
| 51 | Linie |
| 52 | Punkt |
| 53 | Linie |
| 54 | Punkt |
| 55 | Linie |
| 57 | Linie |
| 58 | Punkt |
| 59 | Linie |
| 60 | Punkt |
| 61 | Linie |
| 62 | Punkt |
| 63 | Linie |
| 64 | Punkt |
| 65 | Linie |
| 66 | Punkt |
| 67 | Linie |
| 69 | Verbindungsstück |
| 70 | Druckhalteventil |

**Patentansprüche**

1. Vorrichtung (1) zum automatisierten Herstellen von Milchkaramell, mit:

   einem gegenüber Atmosphärendruck unter Überdruck stehenden Druckauflösebehälter (5) zur Aufnahme einer Grundmischung mit Glukosesirup und Zucker oder mit Wasser und einem Zuckerersatzstoff und zum Erzeugen einer Grundlösung aus der Grundmischung durch Erwärmen der Grundmischung unterhalb des Siedepunkts der Grundlösung,
   einer Zuführleitung (17, 43) zum Zuführen eines Milchprodukts in die Grundlösung, wobei die Zuführleitung (17, 43) stromabwärts des Druckauflösebehälters (5) angeordnet ist, und
   einer Karamellisiervorrichtung (23) zum Erzeugen von Milchkaramell aus dem Milchprodukt, wobei die Karamellisiervorrichtung (23) stromabwärts des Druckauflösebehälters (5) angeordnet ist.

2. Vorrichtung (1) nach Anspruch 1, **dadurch gekennzeichnet, dass** stromabwärts des Druckauflösebehälters (5) ein Druckhalteventil (14), insbesondere ein Schlauchquetschventil (15), angeordnet ist.

3. Vorrichtung (1) nach Anspruch 2, **dadurch gekennzeichnet, dass** die Karamellisiervorrichtung (23) einen Karamellisierbehälter (24) aufweist, der stromabwärts des Druckhalteventils (14) angeordnet ist.

4. Vorrichtung (1) nach Anspruch 2 oder 3, **dadurch gekennzeichnet, dass** die Karamellisiervorrichtung (23) einen Karamellisierrohrabschnitt (40) aufweist, der stromaufwärts des Druckhalteventils (14) angeordnet ist.

5. Vorrichtung (1) nach mindestens einem der vorhergehenden Ansprüche, **dadurch gekennzeichnet, dass** stromaufwärts des Druckauflösebehälters (5) ein Überdruckerzeuger, insbesondere eine Pumpe (3), angeordnet ist.

6. Vorrichtung (1) nach mindestens einem der vorhergehenden Ansprüche, **dadurch gekennzeichnet, dass** die Karamellisiervorrichtung (23) nicht zur Erhöhung der Temperatur der Grundlösung und des Milchprodukts beheizt ist.

7. Vorrichtung (1) nach Anspruch 3, **dadurch gekennzeichnet, dass** die Zuführleitung (17) direkt an den Karamellisierbehälter (24) oder an eine in diesen führende Rohrleitung (16) oder ein Verbindungstück (22) angeschlossen ist.

8. Vorrichtung (1) nach Anspruch 4, **dadurch gekennzeichnet, dass** die Zuführleitung (43) direkt an den Karamellisierrohrabschnitt (40) oder an eine in diesen führende Rohrleitung (13) oder ein Verbindungstück (69) angeschlossen ist.

9. Automatisiertes Verfahren zum Herstellen von Milchkaramell, mit den Schritten:

   Erzeugen einer Grundlösung durch Erwärmen einer Grundmischung mit Glukosesirup und Zucker oder mit Wasser und einem Zuckerersatzstoff unter Überdruck gegenüber Atmosphärendruck unterhalb des Siedepunkts der Grundlösung,
   Zuführen eines Milchprodukts in die Grundlösung,
   Erzeugen von Milchkaramell aus dem Milchprodukt.

10. Verfahren nach Anspruch 9, **dadurch gekennzeichnet, dass** die Grundlösung und das Milchprodukt beim Erzeugen des Milchkaramells nicht im Sinne einer Temperaturerhöhung beheizt werden.

11. Verfahren nach Anspruch 9 oder 10, **dadurch ge-**

**kennzeichnet, dass** das Milchkaramell aufgrund einer Maillard-Reaktion erzeugt wird.

12. Vorrichtung (1) oder Verfahren nach mindestens einem der vorhergehenden Ansprüche, **dadurch gekennzeichnet, dass** das Milchprodukt Teil einer Fett oder Öl enthaltenden Zugabemasse ist.

13. Vorrichtung (1) oder Verfahren nach mindestens einem der vorhergehenden Ansprüche, **dadurch gekennzeichnet, dass** die Grundmischung Fett oder Öl enthält.

14. Vorrichtung (1) oder Verfahren nach mindestens einem der vorhergehenden Ansprüche, **dadurch gekennzeichnet, dass**
   der Überdruck zwischen 2 und 5 bar absolut, insbesondere zwischen 2 und 4 bar absolut, insbesondere zwischen 2,5 und 3,5 bar absolut, insbesondere etwa 3 bar absolut, beträgt, und/oder
   die Grundlösung eine Temperatur von zwischen 120 und 200 °C, insbesondere zwischen 130 und 180 °C, insbesondere zwischen 140 und 170 °C, insbesondere etwa 160 °C, besitzt, und/oder
   die Grundlösung und das darin enthaltene Milchprodukt beim Erzeugen von Milchkaramell eine Temperatur von zwischen 105 und 140 °C, insbesondere zwischen 110 und 130 °C, insbesondere zwischen 110 und 125 °C besitzen.

15. Verfahren nach mindestens einem der vorhergehenden Ansprüche, **dadurch gekennzeichnet, dass** das Verfahren mittels einer Vorrichtung nach mindestens einem der vorhergehenden Ansprüche durchgeführt wird.

**Claims**

1. An apparatus (1) for automated production of milk caramel, comprising:

   a pressure dissolution container (5) for receiving a base mixture including glucose syrup and sugar or including water and a sugar substitute and for producing a base solution of the base mixture by heating the base mixture below the boiling point of the base solution, the pressure dissolution container (5) being subjected to positive pressure compared to the atmospheric pressure,
   a feeding conduit (17, 43) for introducing a milk product into the base solution, the feeding conduit (17, 43) being arranged downstream of the pressure dissolution container (5), and
   a caramelise apparatus (23) for producing milk caramel from the milk product, the caramelise apparatus (23) being arranged downstream of the pressure dissolution container (5).

2. The apparatus (1) of claim 1, **characterised in that** a pressure maintaining valve (14), especially a constriction-hose valve (15), is arranged downstream of the pressure dissolution container (5).

3. The apparatus (1) of claim 2, **characterised in that** the caramelise apparatus (23) includes a caramelise container (24) being arranged downstream of the pressure maintaining valve (14).

4. The apparatus (1) of claim 2 or 3, **characterised in that** the caramelise apparatus (23) includes a caramelise tube section (40) being arranged upstream of the pressure maintaining valve (14).

5. The apparatus (1) of at least one of the preceding claims, **characterised in that** a positive pressure producer, especially a pump (3), is arranged upstream of the pressure dissolution container (5).

6. The apparatus (1) of at least one of the preceding claims, **characterised in that** the caramelise apparatus (23) is not heated to increase the temperature of the base solution and of the milk product.

7. The apparatus (1) of claim 3, **characterised in that** the feeding conduit (17) is directly connected to the caramelise container (24) or to a tube (16) leading into the caramelise container (24) or to a connecting piece (22).

8. The apparatus (1) of claim 4, **characterised in that** the feeding conduit (43) is directly connected to the caramelise tube section (40) or to a tube (13) leading to the caramelised tube section (40) or to a connecting piece (69).

9. An automated method of producing milk caramel, comprising the steps of:

producing a base solution by heating a base mixture including glucose syrup and sugar or including water and a sugar substitute under positive pressure compared to the atmospheric pressure below the boiling point of the base solution, introducing a milk product into the base solution, producing milk caramel from the milk product.

10. The method of claim 9, **characterised in that** the base solution and the milk product for producing the caramel are not heated in the sense of a temperature increase.

11. The method of claim 9 or 10, **characterised in that** the milk caramel is produced due to a Maillard reaction.

12. The apparatus (1) or the method of at least one of the preceding claims, **characterised in that** the milk product is part of an adding mass including fat or oil.

13. The apparatus (1) or the method of at least one of the preceding claims, **characterised in that** the base mixture includes fat or oil.

14. The apparatus (1) or the method of at least one of the preceding claims, **characterised in that** the positive pressure is between 2 and 5 bar absolute, especially between 2 and 4 bar absolute, especially between 2.5 and 3.5 bar absolute, especially approximately 3 bar absolute, and/or the base solution has a temperature of between 120 and 200 °C, especially between 130 and 180 °C, especially between 140 and 170 °C, especially approximately 160 °C, and/or the base solution and the milk product being contained therein for producing milk caramel have a temperature of between 105 and 140 °C, especially between 110 and 130 °C, especially between 110 and 125 °C.

15. The method of at least one of the preceding claims, **characterised in that** the method is conducted by an apparatus of at least one of the preceding claims.

**Revendications**

1. Dispositif (1) pour la fabrication automatisée de caramel au lait, avec:

un réservoir de dissolution sous pression (5) en surpression par rapport à la pression atmosphérique, pour le logement d'un mélange de base avec du sirop de glucose et du sucre ou avec de l'eau et un substitut de sucre et pour la production d'une solution de base à partir du mélange de base par chauffage du mélange de base en dessous du point d'ébullition de la solution de base, une conduite d'alimentation (17, 43) pour l'introduction d'un produit laitier dans la solution de base, la conduite d'alimentation (17, 43) étant disposée en aval du réservoir de dissolution sous pression (5), et un dispositif de caramélisation (23) pour la production de caramel au lait à partir du produit laitier, le dispositif de caramélisation (23) étant disposé en aval du réservoir de dissolution sous pression (5).

2. Dispositif (1) selon la revendication 1, **caractérisé en ce que**, en aval du réservoir de dissolution sous pression (5) est disposée une soupape de maintien de la pression (14), plus particulièrement une soupape péristaltique (15).

3. Dispositif (1) selon la revendication 2, **caractérisé en ce que** le dispositif de caramélisation (23) comprend un réservoir de caramélisation (24) qui est disposé en aval de la soupape de maintien de la pression (14).

4. Dispositif (1) selon la revendication 2 ou 3, **caractérisé en ce que** le dispositif de caramélisation (23) comprend une portion de tube de caramélisation (40) qui est disposée en amont de la soupape de maintien de la pression (14).

5. Dispositif (1) selon l'une des revendications précédentes, **caractérisé en ce que**, en amont du réservoir de dissolution sous pression (5), est disposé un générateur de surpression, plus particulièrement une pompe (3).

6. Dispositif (1) selon l'une des revendications précédentes, **caractérisé en ce que** le dispositif de caramélisation (23) n'est pas chauffé pour l'augmentation de la température de la solution de base et du produit laitier.

7. Dispositif (1) selon la revendication 3, **caractérisé en ce que** la conduite d'alimentation (17) est raccordée directement au réservoir de caramélisation (24) ou à une canalisation (16) ou un élément de liaison (22) qui y conduit.

8. Dispositif (1) selon la revendication 4, **caractérisé en ce que** la conduite d'alimentation (43) est raccordée directement à la portion de tube de caramélisation (40) ou à une canalisation (13) ou un élément de liaison (69) qui y conduit.

9. Procédé automatisé de fabrication de caramel au lait, avec les étapes suivantes:

   production d'une solution de base par chauffage d'un mélange de base avec du sirop de glucose et du sucre ou avec de l'eau et un substitut du sucre sous une surpression par rapport à la pression atmosphérique en dessous du point d'ébullition de la solution de base,
   introduction d'un produit laitier dans la solution de base,
   production de caramel au lait à partir du produit laitier.

10. Procédé selon la revendication 9, **caractérisé en ce que** la solution de base et le produit laitier ne sont pas chauffés, lors de la production du caramel au lait dans le but d'augmenter la température.

11. Procédé selon la revendication 9 ou 10, **caractérisé**

**en ce que** le caramel au lait est produit suite à une réaction de Maillard.

12. Dispositif (1) ou procédé selon au moins l'une des revendications précédentes, **caractérisé en ce que** le produit laitier fait partie d'une masse ajoutée contenant de la graisse ou de l'huile.

13. Dispositif (1) ou procédé selon au moins l'une des revendications précédentes, **caractérisé en ce que** le mélange de base contient de la graisse ou de l'huile.

14. Dispositif (1) ou procédé selon au moins l'une des revendications précédentes, **caractérisé en ce que** la surpression est entre 2 et 5 bar absolus, plus particulièrement entre 2 et 4 bar absolus, plus particulièrement entre 2,5 et 3,5 bar absolus, plus particulièrement d'environ 3 bar absolus et/ou
la solution de base présente une température entre 120 et 200 °C, plus particulièrement entre 130 et 180 °C, plus particulièrement entre 140 et 170 °C, plus particulièrement d'environ 160 °C et/ou
la solution de base et le produit laitier qui y est contenu présentent, lors de la production de caramel au lait, une température entre 105 et 140 °C, plus particulièrement entre 110 et 130 °C, plus particulièrement entre 110 et 125 °C.

15. Procédé selon au moins l'une des revendications précédentes, **caractérisé en ce que** le procédé est exécuté au moyen d'un dispositif selon au moins l'une des revendications précédentes.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004044139 A1
- DE 2520149 A1
- DE 2018267
- DE 69618990 T2
- US 4056640 A
- US 20030124243 A1
- EP 2428121 B1